# EUROPEAN PATENT SPECIFICATION

(11) **EP 0 651 580 B1**
(45) Date of publication and mention of the grant of the patent: **30.01.2002**
(21) Application number: 94116986.4
(22) Date of filing: 27.10.1994
(51) Int. Cl.: H04N 7/26

(54) **System and method for packing data into video processor**
Verfahren und Vorrichtung zum Packen von Daten in einen Bildprozessor
Système et méthode pour le remplissage de données dans un processeur vidéo

(30) Priority: 04.11.1993 US 147801; 27.10.1993 US 147249
(43) Date of publication of application: 03.05.1995
(73) Proprietor: TEXAS INSTRUMENTS INCORPORATED, Dallas Texas 75265 (US)
(72) Inventor: Gove, Robert J., Plano, TX 75075 (US); Doherty, Donald B., Richardson TX 75080-1536 (US); Marshall, Stephen W., Richardson, TX 75080 (US); Davis, Carl W., Plano, TX 75075 (US); Egan, Joseph G., Garland, TX 75040 (US); Meyer, Richard C., Plano, TX 75023 (US); Sampsell, Jeffrey B., Plano, TX 75074 (US); Heimbuch, Scott D., Dallas, TX 75248 (US); Markandey, Vishal, Dallas, TX 75209 (US)
(74) Representative: Schwepfinger, Karl-Heinz, Dipl.-Ing.

(56) References cited:
- EP-A- 0 554 586
- JP-A- 2 247 637

## Description

### TECHNICAL FIELD OF THE INVENTION

This invention relates in general to the field of electronic devices. More particularly, this invention relates to a system and method for packing data into a video processor.

### BACKGROUND OF THE INVENTION

Video signals may be processed using known devices. The video signals may be processed for various different applications. One known video processor is the Scanline Video Processor produced by TEXAS INSTRUMENTS INCORPORATED. This video processor operates on one line of video signal at a time. The video processor has a plurality of processing elements. The number of pixels that may be processed at one time is limited by the number of processing elements.

A recursive video signal processor for estimating motion vectors, which demultiplexes an incoming high definition video signal into four adjacent quadrants, which are each processed by four separate motion estimators, is known from EP-A-0 554 586. The division of a high definition television field into four quadrants allows use of normal definition television systems. This document reports that adjacent quadrants preferably show a partial overlap.

A method for packing data in a processor, wherein parallel reading is performed to shorten processing time, is known from Patent Abstracts of Japan, Vol. 14, No. 574 (P-1145), December 20, 1990 and JP-A-02247637. A stimulable phosphor sheet arranged at equal intervals with three pairs of a reading unit is fixed on an X stage and shifted in one direction. The reading unit scans each divided stimulable phosphor sheet region, and read image data are stored in frame memories. An image processor reads the image data from the frame memories sequentially through a multiplexer, receives the data as the read image data by one piece of the stimulable phosphor sheet and processing is performed.

In a typical processing application, the number of pixels in one line of video signal is less than the number of processing elements of the video processor. Therefore, the video processor is not efficiently used.

### SUMMARY OF THE INVENTION

In accordance with the present invention, a system for packing data into a video processor is disclosed that substantially eliminates or reduces disadvantages and problems associated with prior systems.

More specifically, the present invention provides a system for packing data in a video processor. The system comprises the features defined in claim 1.

The present invention further provides a method for packing video data in a video processor comprising the steps defined in claim 4.

It is a technical advantage of the present invention to provide a system for packing data into a video processor such that the processing capacity of the video processor is efficiently used.

### BRIEF DESCRIPTION OF THE DRAWINGS

For a more complete understanding of the present invention and the advantages thereof, reference is now made to the following description taken in conjunction with the accompanying drawings in which like reference numbers indicate like features and wherein:
FIGURE 1 illustrates a digital television system constructed according to the teachings of the present invention;
FIGURE 2 illustrates four vertical strips created by the system of FIGURE 1;
FIGURE 3 illustrates the overlap in pixels between adjacent channels created by the system of FIGURE 1;
FIGURE 4 illustrates a data packing circuit constructed according to the teachings of the present invention; and
FIGURE 5 illustrates the combination of lines from first and second parts of a video field as prepared by the circuit of FIGURE 4.

### DETAILED DESCRIPTION OF THE INVENTION

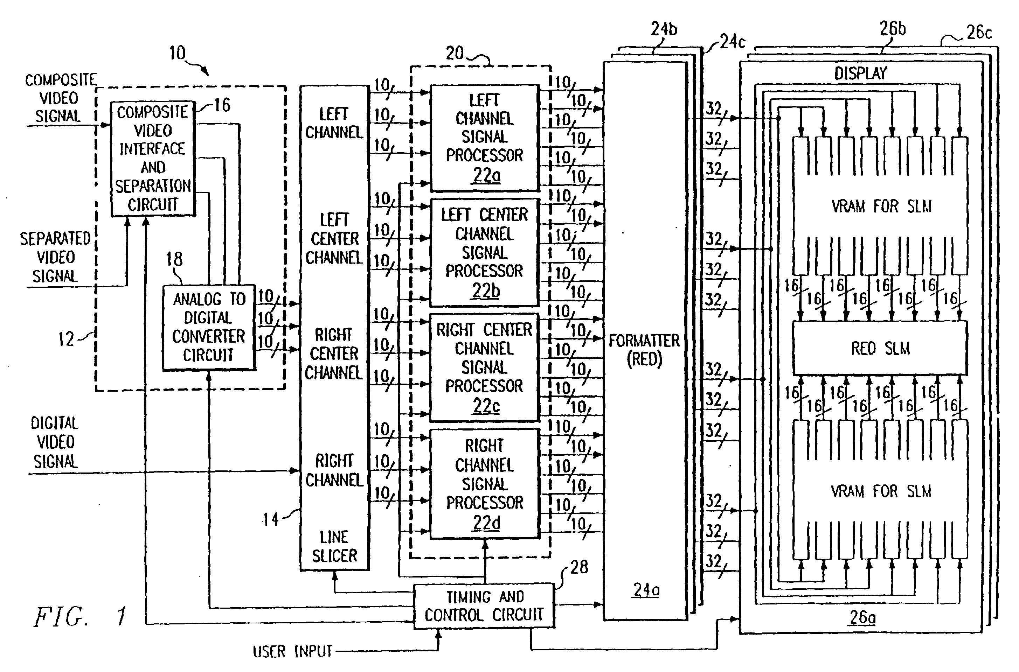

FIGURE 1 illustrates a digital television system indicated generally at 10 and constructed according to the teachings of the present invention. System 10 comprises a parallel architecture wherein input video signals may be divided into channels to be processed in parallel. For example, system 10 may implement appropriate functions such that a standard video signal may be used to provide a high definition video display. Alternatively, system 10 may sample and display a high definition video signal.

System 10 may receive video signals in composite or component form. For example, system 10 may receive an analog composite video signal, an analog video signal in component form, or a digital video signal. System 10 may convert a composite video signal into a plurality of video signals for processing. For example, an analog composite video signal in the format established by the National Television Standards Committee (hereinafter "NTSC") may be separated into a luminance signal, identified by the symbol Y, and two color difference signals, identified by the symbols I and Q. Alternatively, system 10 may separate other standard composite video signals into appropriate video signals for processing according to Table 1 below.

**TABLE 1**

| Input Video Format | Color Space Domain |
|---|---|
| NTSC | Y, I, Q |
| PAL and SECAM | Y, U, V |
| SMPTE 240M, SMPTE 260M | Y, Pr, Pb |

It is noted that the other standard video formats include: Phase Alternating Line, hereinafter "PAL"; Sequential Color with Memory, hereinafter "SECAM"; and Society of Motion Picture Engineers, hereinafter "SMPTE".

Each of these standard video signals comprise a luminance signal, hereinafter "luma" or "Y", and a chrominance signal, hereinafter "chroma" or "C". The chroma signal may be further divided into appropriate color difference signals as shown in Table 1. For clarity, each of the standard video signals may hereinafter be referred to as providing a video signal in a "color difference color space" or a "Y-I-Q color space." As an alternative to the standard video signals of Table 1, a video source may be coupled to system 10 to provide a red video signal, hereinafter "R", a green video signal, hereinafter "G", and a blue video signal, hereinafter "B". Such a video source may hereinafter be referred to as providing a video signal in an "R-G-B color space."

System 10 prepares a video signal for parallel processing in receiving circuitry 12, and line slicer 14. Receiving circuitry 12 may receive, for example, a composite video signal in the NTSC format from an external source (not explicitly shown). Alternatively, receiving circuitry 12 may receive separate Y and C video signals. Furthermore, receiving circuitry 12 may receive separate video signals in an R-G-B color space.

Receiving circuitry 12 comprises composite video interface and separation circuit 16 coupled to analog to digital converter circuit 18. Composite video interface and separation circuit 16 may separate a composite video signal into, for example, three separate video signals. Analog to digital converter circuit 18 may convert each of the separate video signals into ten bit digital video signals. Analog to digital converter circuit 18 of receiving circuitry 12 is coupled to provide three ten bit digital video signals to line slicer 14. Additionally, a digital video signal may be coupled directly to line slicer 14.

Line slicer 14 divides each digital video signal into a plurality of separate channels for each line of composite video signal. For example, line slicer 14 may divide each digital video signal into four, five or another appropriate number of channels. The number of channels may depend on the number of pixels in a line of video signal, and the number of pixels that may be simultaneously processed by a video signal processor of system 10. Line slicer 14 may provide appropriate overlap between the various channels for processing as described below.

System 10 processes the digital video signals in processing circuitry 20. Processing circuitry 20 is coupled to line slicer 14. Processing circuitry 20 comprises a plurality of channel signal processors 22a through 22d. The number of channel signal processors 22 may be equal to the number of channels provided by line slicer 14. Each channel signal processor 22a through 22d receives all three 10 bit digital video signals for the channel corresponding to that signal processor 22a through 22d. Processing circuitry 20 may convert each line of digital video signal into two lines of digital video signal output. Each channel signal processor 22a through 22d, therefore, may have six separate outputs, for example, two ten bit red outputs, two ten bit green outputs, and two ten bit blue outputs. Additionally, processing circuitry 20 may perform the following functions: color space conversion, gamma correction, and picture quality control.

System 10 reconnects and displays the processed video data. A plurality of formatters 24a through 24c reconnect the video data and a plurality of displays 26a through 26c display the video data. One formatter 24a through 24c and one display 26a through 26c operate on a different digital video signal as indicated in FIGURE 1. For example, formatter 24a and display 26a may operate on a red video signal. Formatter 24b and display 26b may operate on a green video signal. Finally, formatter 24c and display 26c may operate on a blue video signal.

Two ten bit outputs of each channel signal processor 22a through 22d are coupled to an appropriate formatter 24a through 24c. Formatters 24a through 24c remove overlap between adjacent channels, reconnect the channels, and prepare the reconnected digital video signals for display on displays 26a through 26c. Formatters 24a through 24c each provide 128 bit words in four 32 bit channels to displays 26a through 26c. Displays 26a through 26c may comprise, for example, a Spatial Light Modulator (hereinafter "SLM") such as a 2 x 128 pin Digital Micromirror Device (hereinafter "DMD") produced by TEXAS INSTRUMENTS INCORPORATED. However, displays 26a through 26c are not limited to digital displays. It is within the scope of the teachings of the present invention for the processed video signal to be displayed on an analog display.

Timing and control circuit 28 is coupled to composite video interface and separation circuit 16, analog to digital converter circuit 18, line slicer 14, processing circuitry 20, formatters 24a through 24c, and displays 26a through 26c. Timing and control circuit 28 is operable to control the timing of each aspect of system 10. The timing of system 10 may be accomplished through use of a synchronization (hereinafter "sync") signal supplied to timing and control circuit 28 by composite video interface and separation circuit 16. Additionally, timing and control circuit 28 is operable to accept user inputs to control the timing of various functions of system 10. For example, timing and control circuit 28 may receive user inputs to select the type of input video signal coupled to receiving circuitry 12. Furthermore, timing and control circuit 28 may accept information for processing circuitry 20 such as a scaling factor, a gamma correction factor, the desired processing method, and picture control functions. Furthermore, timing and control circuit 28 may receive a specific sampling rate for analog to digital converter circuit 18.

In operation, system 10 may prepare a standard video signal to produce a high definition display. As described previously, system 10 may receive analog or digital video signals in composite or separated form. For conciseness, the operation of system 10 is described in conjunction with receiving an analog composite video signal. System 10 separates a composite video signal into video signals, divides the video signals into a plurality of channels, and processes the channels in parallel. An advantage of using a parallel architecture in system 10 is that system 10 is able to process the video signals at a low speed while providing a high definition display. Consequently, system 10 may incorporate existing video processor components.

Composite video interface and separation circuit 16 separates the composite video signal into, for example, three separate video signals. Composite video interface and separation circuit 16 may, for example, separate a composite video signal into Y, I, and Q video signals of the NTSC standard.

Analog to digital converter circuit 18 may sample each video signal at a frequency of, for example, 71.1 MHz. The appropriate sampling rate may depend on the number of pixels allocated for a line of video on displays 26a through 26c, and the time for one line of video signal to be received by receiving circuitry 12. Therefore, the sampling rate may be adjusted to create a predetermined number of pixels for each line of video signal. Analog to digital converter circuit 18 may comprise, for example, Analog to Digital Converter board AD9060 produced by ANALOG DEVICES. Alternatively, analog to digital converter circuit 18 may comprise another appropriate analog to digital converter device operable to sample data at an appropriate sampling rate on the order of 75 MHz.

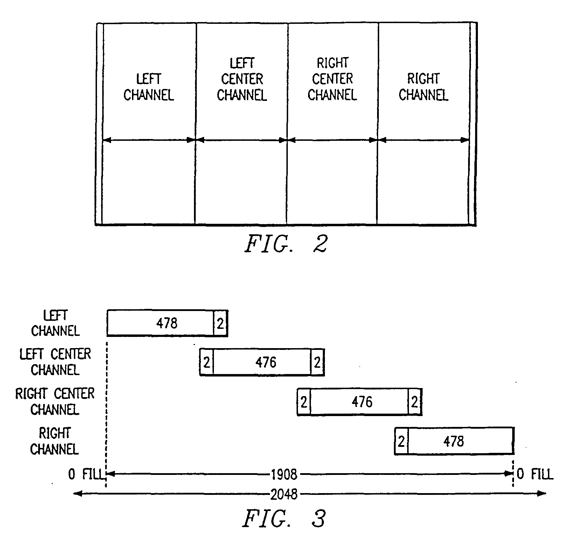

Line slicer 14 divides each digital video signal into a plurality of separate channels for each line of video signal. For example, line slicer 14 may divide each line of the digital video signal into four channels so that the video signal may be processed in parallel. By dividing each line of digital video signal in the same manner, each channel signal processor 22a through 22d effectively processes one vertical strip of each video frame. FIGURE 2 shows the four vertical strips processed by channel signal processors 22a through 22d for the embodiment of FIGURE 1. Alternatively, line slicer 14 may divide a line on a pixel by pixel basis or line slicer 14 may divide a video frame into horizontal strips. An advantage of dividing a video frame into vertical strips is that the related processing steps performed by processing circuitry 20 are simplified.

Additionally, line slicer 14 may provide for overlap between the vertical channels by providing common pixels to adjacent channels as shown in FIGURE 3. The overlap may comprise, for example, from one to five pixels. The overlapping pixels may be used to provide appropriate data for each channel to perform the various functions as called for by processing circuitry 20. The amount of overlap between channels may be varied depending of the specific functions implemented in processing circuitry 20.

System 10 processes the digital video signals in processing circuitry 20. Processing circuitry 20 may perform the progressive scan function (hereinafter "proscan"). Proscan "de-interlaces" a video signal by creating an entire video frame from a single or multiple video fields at the field rate. As described previously, a standard video signal may comprise two fields of video data for each frame. Additionally, processing circuitry 20 may convert the digital video signals into a different color space. For example, processing circuitry 20 may convert digital video signals from a color difference color space to an R-G-B color space. Furthermore, processing circuitry may remove a gamma curve from a standard video signal. Finally, processing circuitry 20 may control the quality of a video display in response to user inputs such as inputs for adjustments to brightness, hue, contrast, sharpness and saturation.

System 10 reconnects and displays the processed digital video signal using formatters 24a through 24c and displays 26a through 26c. Formatters 24a through 24c remove overlap between adjacent channels. Additionally, formatters 24a through 24c prepare the reconnected digital video signals for display on displays 26a through 26c. For example, formatters 24a through 24c may produce a plurality of bit planes from the reconnected digital video signals. Each bit plane may correspond to a particular bit for each pixel in a particular video frame. In the embodiment of FIGURE 1, formatters 24a through 24c each may produce 10 bit planes of video data for each separate video signal that are to be provided to displays 26a through 26c in 128 bit words. Based on the output of formatters 24a through 24c, displays 26a through 26c may project appropriate images corresponding to the processed video signals on, for example, a screen (not shown). The combination of the different video signals output by displays 26a through 26c result in a single, appropriately colored, image.

It should be understood that system 10 may be operable to be programmed to accept any appropriate standard analog or digital video signal. Alternatively, system 10 may be preprogrammed to accept only a limited number of appropriate standard analog or digital video signals.

Channel signal processors 22a through 22d may include one or more scan line video processors (SVPs), produced by TEXAS INSTRUMENTS INCORPORATED, per separated video signal input. As currently produced by TEXAS INSTRUMENTS INCORPORATED, the SVP may process a line of up to 960 pixels at one time. Therefore, processing a line of less than 960 pixels does not efficiently use the processing capabilities of the SVP. Each channel of the embodiment of FIGURE 1 may comprise 480 pixels. To more efficiently use the SVP, multiple lines may be combined and processed simultaneously in the SVPs.

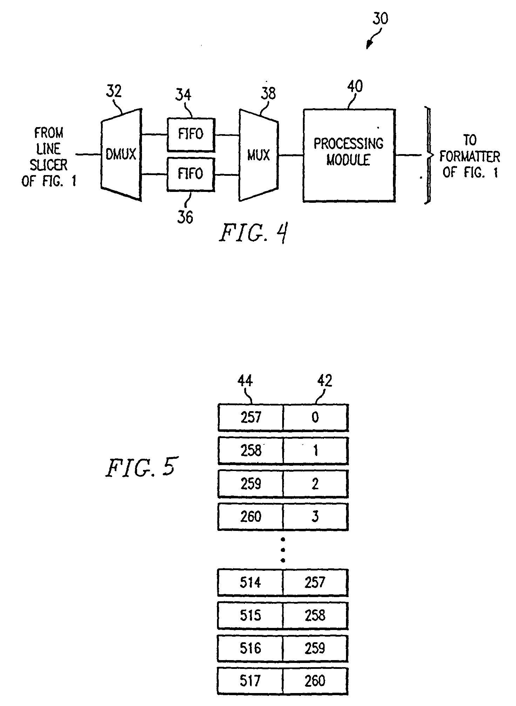

FIGURE 4 illustrates a data packing circuit indicated generally at 30 and constructed according to the teachings of the present invention. Each processing module 22a through 22d of FIGURE 1 may comprise one data packing circuit 30 for each separated video signal input. For conciseness, data packing circuit 30 will only be described with respect to one separated video signal input. It is understood that the description of data packing circuit 30 is equally applicable to each separated video signal input.

Data packing circuit 30 comprises demultiplexor 32, first and second first in-first out buffer memories 34 and 36, respectively, and multiplexor 38. Demultiplexor 32 is coupled to receive a separated video signal from line slicer 14 of FIGURE 1. Demultiplexor 32 is coupled to first and second first in-first out buffer memories 34 and 36. First and second first in-first out buffer memories 34 and 36 are coupled to multiplexor 38. The output of multiplexor 38 is coupled to a processing module 40 having at least one SVP.

In operation, a video field may be divided into first and second parts 42 and 44 with a predetermined overlap between the parts. Each part 42 and 44 may comprise approximately one-half of the video field. One line from first part 42 may be combined with one line from second part 44 as shown in FIGURE 5. The combined lines may be processed as one line by an SVP. The overlap between the parts may, for example, allow implementation of an N-tap vertical filter by the SVP as explained below.

First and second parts of a video field 42 and 44 may be separated and stored by demultiplexer 32, and first and second first in-first out buffer memories 34 and 36. Demultiplexor 32 may communicate first part 42 of a video field to first in-first out buffer memory 34 and second part 44 of the video field to second first in-first out buffer memory 36.

Multiplexor 38 may combine one line of video data from first in-first out buffer memory 34 with one line of video data from second first in-first out buffer memory 36. For example, multiplexor 38 may output line 0 from first in-first out buffer memory 34 followed by line 257 from second first in-first out buffer memory 36. By combining successive lines of first and second first in-first out buffer memories 34 and 36, multiplexor 38 may provide appropriate pairs of video lines to processing module 40. These line pairs may be processed as a single line by an SVP.

FIGURE 5 illustrates the output of data packing circuit 30. First part 42 of a video field is processed in a first half of the SVP and second part 44 is processed in a second half of the SVP. To provide for an N-tap vertical filter, data packing circuit 30 may provide for an overlap of at least N-1 lines in both first and second first in-first out buffer memories 34 and 36. For example, a 5-tap vertical filter may be implemented for a video field comprising 518 lines by storing lines 257 to 260 in both first and second first in-first out buffer memories 34 and 36. In this manner, the overlapping lines will be processed in both the first and second halves of the SVP.

Vertical processing of a video line may require access to two lines of video data above and two lines of video data below the line of video being processed. The overlap provided by data packing circuit 30 allows vertical processing of lines 257 through 260. Lines 257 and 258 have access to two lines above and two lines below the line being processed in first part 42 of a video field. Similarly, lines 259 and 260 have access to two lines above and two lines below the line being processed in second part 44 of a video field.

Although the present invention has been described in detail, this description is not intended to be construed in a limiting sense. For example, it is within the teachings of the present invention to provide various amounts of overlap between the parts of the video field in data packing circuit 30. Furthermore, the number of parts into which the video field is divided may similarly be varied.

## Claims

1. A system for packing data in a video processor, said processor being capable of performing operations simultaneously on N pixels of data, said system comprising:
a line slicer (14) for separating an image field into overlapping M-pixel-wide vertical strips of pixels, wherein M is less than or equal to N/2;
first and second memories (34, 36), each operable to store multiple segments of video data, each segment comprising one line of video data from one of said vertical strips;
a demultiplexer (32) receiving said segments, said demultiplexer (32) being operable to store a first contiguous group of said segments in said first memory (34), a second contiguous group of said segments in said second memory (36), and a third contiguous group adjacent to said first and second contiguous groups in both said first and said second memories (34, 36);
a multiplexer (38) receiving said segments of video data from said memories (34, 36) and operable to combine one segment of video data from each memory (34, 36) into a single segment of video data for processing by said video processor (40), wherein said single combined segment contains data for no more than N pixels.

2. The system of claim 1, wherein said first and said second memories (34, 36) are first and second buffer memories.

3. The system of claim 1 or claim 2, wherein said first and said second memories (34, 36) are first and second first in-first out memories.

4. A method for packing video data in a video processor, comprising the steps of:
storing a plurality of video data segments in a plurality of memories (34, 36), each video data segment representing a horizontal group of video pixels, the step of storing comprising the step of storing video data segments from a first image region in a first said memory (34), video data segments from a second image region abutting said first image region in said first memory (34) and a second memory (36), and video data segments from a third region abutting said second region in said second memory;
combining one video data segment stored in each memory (34, 36) to form a data word for processing by the video processor (40); and
communicating the combined data word to the video processor (40).

5. The method of claim 4, wherein the step of storing a plurality of video data segments comprises the step of storing a first plurality of video data segments comprising approximately the top half of a video field and storing a second plurality of video data segments comprising approximately the bottom half of a video field.

## Patentansprüche

1. System zum Packen von Daten in einem Videoprozessor, der gleichzeitig Operationen an N Datenpixeln durchführen kann, wobei das System enthält:
einen Zeilenteiler (14) zum Trennen eines Bildfeldes in sich überlappende vertikale Pixelstreifen mit einer Breite von M Pixeln, wobei M kleiner oder gleich N/2 ist;
erste und zweite Speicher (34, 36), die jeweils mehrere Videodatensegmente speichern können, wobei jedes Segment eine Videodatenzeile aus einem der vertikalen Streifen umfaßt;
einen Demultiplexer (32), der die Segmente empfängt, wobei der Demultiplexer (32) eine erste zusammenhängende Gruppe der Segmente in dem ersten Speicher (34) speichern kann, eine zweite zusammenhängende Gruppe der Segmente in dem zweiten Speicher (36) speichern kann und eine dritte zusammenhängende Gruppe, angrenzend an die erste und die zweite zusammenhängende Gruppe, sowohl im ersten als auch im zweiten Speicher (34, 36) speichern kann;
einen Multiplexer (38), der die Videodatensegmente aus den Speichern (34, 36) empfängt und ein Videodatensegment aus jedem Speicher (34, 36) zu einem einzigen Videodatensegment zur Verarbeitung durch den Videoprozessor (40) kombinieren kann, wobei das einzige kombinierte Segment Daten für nicht mehr als N Pixels enthält.

2. System nach Anspruch 1, bei dem der erste und der zweite Speicher (34, 36) ein erster und ein zweiter Pufferspeicher sind.

3. System nach Anspruch 1 oder Anspruch 2, bei dem der erste und der zweite Speicher (34, 36) ein erster und ein zweiter FIFO-Speicher sind.

4. Verfahren zum Packen von Videodaten in einen Videoprozessor, mit den Schritten:
Speichern mehrerer Videodatensegmente in mehreren Speichern (34, 36), wobei jedes Videodatensegment eine horizontale Gruppe aus Videopixeln repräsentiert, wobei der Schritt des Speicherns den Schritt des Speicherns von Videodatensegmenten aus einem ersten Bildbereich in einem ersten Speicher (34), von Videodatensegmenten aus einem zweiten, an den ersten Bildbereich angrenzenden Bildbereich in dem ersten Speicher (34) und einem zweiten Speicher (36), sowie von Videodatensegmenten aus einem an den zweiten Bereich angrenzenden dritten Bereich in dem zweiten Speicher umfaßt;
Kombinieren eines in jedem Speicher (34, 36) gespeicherten Videodatensegments zur Bildung eines Datenworts für die Verarbeitung durch den Videoprozessor (40); und
Übermitteln des kombinierten Datenworts an den Videoprozessor (40).

5. Verfahren nach Anspruch 4, bei welchem der Schritt des Speicherns mehrerer Videodatensegmente den Schritt des Speicherns einer ersten Anzahl von etwa die obere Hälfte eines Video-Halbbildes umfassenden Videodatensegmenten sowie das Speichern einer zweiten Anzahl von etwa die untere Hälfte eines Video-Halbbildes umfassenden Videodatensegmenten enthält.

## Revendications

1. Système de compression de données dans un processeur vidéo, ledit processeur étant apte à effectuer des opérations simultanément sur N pixels de données, ledit système comprenant :
un séparateur (14) de lignes pour séparer une zone d'image en bandes de pixels verticales se chevauchant et d'une largeur de M pixels, M étant inférieur ou égal à N/2 ;
des première et seconde mémoires (34, 36), pouvant chacune être commandées pour enregistrer de multiples segments de données vidéo, chaque segment comprenant une ligne de données vidéo de l'une desdites bandes verticales ;
un démultiplexeur (32) recevant lesdits segments, ledit démultiplexeur (32) pouvant être commandé pour enregistrer un premier groupe contigu desdits segments dans ladite première mémoire (34), un deuxième groupe contigu desdits segments dans ladite seconde mémoire (34) et un troisième groupe contigu adjacent auxdits premier et deuxième groupes dans à la fois lesdites première et seconde mémoires (34, 36) ;
un multiplexeur (38) recevant lesdits segments de données vidéo desdites mémoires (34, 36) et pouvant être commandé pour combiner un segment de données vidéo de chaque mémoire (34, 36) en un seul segment de données vidéo pour le traitement par ledit processeur vidéo (40), ledit seul segment combiné contenant des données ne correspondant pas à plus de N pixels.

2. Système selon la revendication 1, dans lequel lesdites première et seconde mémoires (34, 36) sont des première et seconde mémoires tampon.

3. Système selon la revendication 1 ou 2, dans lequel lesdites première et seconde mémoires (34, 36) sont des première et seconde mémoires premier entré - premier sorti.

4. Procédé de compression de données vidéo dans un processeur vidéo, comprenant les étapes consistant à :
enregistrer une pluralité de segments de données vidéo dans une pluralité de mémoires (34, 36), chaque segment de données vidéo représentant un groupe horizontal de pixels vidéo, l'étape d'enregistrement comprenant l'étape consistant à enregistrer des segments de données vidéo d'une première région d'image dans une première mémoire (34), des segments de données vidéo d'une deuxième région d'image contiguë à ladite première région d'image dans ladite première mémoire (34) et dans une seconde mémoire (36), et des segments de données vidéo d'une troisième région contiguë à ladite deuxième région dans ladite seconde mémoire (36);
combiner un segment de données vidéo enregistré dans chaque mémoire (34, 36) pour former un mot de données pour le traitement par le processeur vidéo (40) ;
communiquer le mot de données combiné au processeur vidéo (40).

5. Procédé selon la revendication 4, dans lequel l'étape d'enregistrement d'une pluralité de segments de données vidéo comprend l'étape consistant à enregistrer une première pluralité de segments de données vidéo comprenant approximativement la moitié supérieure d'une zone vidéo et à enregistrer une deuxième pluralité de segments de données vidéo comprenant approximativement la moitié inférieure d'une zone vidéo.
